# EUROPEAN PATENT APPLICATION

(11) **EP 2 415 337 A1**
(43) Date of publication of application: **08.02.2012**
(21) Application number: 11176103.7
(22) Date of filing: 01.08.2011
(51) Int. Cl.: A01B 45/02

(54) **Turf treatment apparatus**

(30) Priority: 02.08.2010 GB 1012906
(71) Applicant: Michel, David, Adel, Leeds LS16 7AL (GB)
(72) Inventor: Michel, David, Adel, Leeds LS16 7AL (GB)
(74) Representative: Craven, Ian

(57) **Abstract**

A turf treatment trailer attachable to a ride-on lawnmower. The turf treatment trailer comprises a drawbar (12) which is detachably attachable to the ride-on lawnmower, a frame (14) connected to the drawbar (12), a first ground-bearing trailer wheel (16) rotatably mounted on the frame (14), a second ground-bearing trailer wheel (18) rotatably mounted on the frame (14) and at least one turf treatment unit detachably attached to the frame (14). The turf treatment unit is positioned on the frame to trail the first ground-bearing trailer wheel (16) so that in use when the turf treatment trailer is attached to the ride-on lawnmower which is moving forward over the ground, a substantially common area of the turf on the ground is sequentially traversed by the first ground-bearing trailer wheel (16) and treated by the turf treatment unit.

## Description

The present invention relates to a turf treatment trailer attachable to a ride-on lawnmower, a vehicle system comprising the turf treatment trailer and a method for treating turf.

In order to produce a high quality surface on fine turf such as golf putting greens, many operations must be performed on the turf besides regular routine mowing of the grass. In particular, the use of a roller is beneficial in producing a smooth surface on which a golf ball can roll freely.

Golf greens are often mown with a type of ride-on mower known as a greens triple or triplex mower. This comprises a prime mover power unit which the operator drives and onto which are attached (typically) three mowing units. These mowing units may be substituted by roller units, in order to roll the greens as a second separate operation after mowing.

Greens triple mowers have the mowing units positioned ahead of the driving wheels. This is so that the grass may be mown uniformly before the driving wheels pass over it and flatten it. However, this arrangement is counterproductive when roller units are used in place of the mowing units because after the rollers have passed over the surface and smoothed it out, the tyres of the mowing unit then pass over the surface and leave noticeable tyre tracks.

The present invention seeks to improve turf treatment by providing a turf treatment trailer attachable to a ride-on lawnmower which may create an improved turf finish and reduce the man hours required to complete multiple different turf treatment operations.

Thus viewed from one aspect the present invention provides a turf treatment trailer attachable to a ride-on lawnmower comprising:
a drawbar which is detachably attachable to the ride-on lawnmower;
a frame connected to the drawbar;
a first ground-bearing trailer wheel rotatably mounted on the frame;
a second ground-bearing trailer wheel rotatably mounted on the frame; and
at least one turf treatment unit detachably attached to the frame, wherein the turf treatment unit is positioned on the frame to trail the first ground-bearing trailer wheel so that in use when the turf treatment trailer is attached to the ride-on lawnmower which is moving forward over the ground, a part of the turf on the ground is sequentially traversed by the first ground-bearing trailer wheel and treated by the turf treatment unit.

The turf treatment trailer of the present invention may advantageously improve the appearance of the turf when turf treatment has been completed. This is achieved by positioning the turf treatment unit to trail the first ground-bearing trailer wheel in use so that the turf treatment unit passes over the part of the ground which has received the tyre track from the first ground-bearing trailer wheel. This allows the turf treatment unit to reduce the visibility of the tyre track.

In addition, by attachment to a ride-on lawnmower during use, the turf treatment trailer of the present invention may reduce the man hours required to complete a cutting operation and a turf treatment operation on the part of the turf by allowing both operations to be performed during one pass of the ride-on lawnmower and turf treatment trailer over the turf.

The (or each) turf treatment unit may be powered or unpowered during use. The (or each) powered turf treatment unit may be driven by a power source.

The turf treatment trailer may further comprise a power source. The power source may provide power to the (or each) turf treatment unit if the turf treatment unit is of a power-driven type. An example of a power-driven turf treatment unit is a vibratory roller unit.

The power source may comprise an engine. The engine may be mounted on the frame of the turf treatment trailer. The engine may provide power to the (or each) turf treatment unit. The power source may comprise a mechanical, electrical, hydraulic or pneumatic power source. The power transmission from the power source to the (or each) turf treatment unit may be provided by a mechanical, electrical, hydraulic or pneumatic coupling. The mechanical, electrical, hydraulic or pneumatic coupling may be couplable to a mechanical, electrical, hydraulic or pneumatic power source located on the ride-on lawnmower which may tow the turf treatment trailer.

Preferably the turf treatment trailer comprises an engine mounted on the frame and a driveshaft extending from the engine, wherein the driveshaft is coupled to the at least one turf treatment unit to provide power to the at least one turf treatment unit.

The turf treatment unit may be a roller unit, vibratory roller unit, cylindrical cutter unit, vertical cutter unit, scarifier unit, grooming unit, slicing unit, aerator unit, sarel roller unit, rotary brush unit, topdressing brush unit, rake unit or water collecting roller unit.

The water collecting roller unit may be used for soaking up water from flooded turf surfaces. The water collecting roller unit may comprise a support assembly. The support assembly may be a subframe of the turf treatment trailer. The support assembly may comprise a first arm and a second arm. A ground-bearing roller may be rotatably mounted on the support assembly between the first arm and the second arm. The ground-bearing roller may comprise a resilient porous surface layer which collects water or liquid from ground which it contacts. The resilient porous surface layer may be a sponge layer.

The water collecting roller unit may further comprise a pressure roller rotatably mounted on the support assembly and a trough mounted on the support assembly. The pressure roller may be positioned to compress the resilient porous surface layer and the trough may be positioned to receive any liquid which is expelled from the resilient porous surface layer when it is compressed by the pressure roller.

The turf treatment trailer may comprises a pump connected to the trailer power source, a conduit and a container. The pump may move water collected by the water collecting roller unit to the container for storage. The pump may be connected to the drive shaft of the trailer engine by a flexible coupling.

The pump may be positioned in the trough of the water collecting roller unit to suck up water collected in the trough. The water from the trough may be propelled by the pump through the conduit into the container. The water may be discharged from the container at a suitable point in time to an appropriate discharge location.

The conduit may be a hose. The hose may be flexible.

Preferably the turf treatment trailer comprises three turf treatment units.

Preferably the or each turf treatment unit is a vibratory roller unit.

The frame may comprise a leading portion and a trailing portion. The leading portion of the frame may be connected to the drawbar. The leading portion of the frame may lead the first and second ground-bearing trailer wheels. The trailing portion of the frame may trail the first and second ground-bearing trailer wheels.

The turf treatment trailer may further comprise a subframe. The subframe may be detachably attached to the frame of the turf treatment trailer. The subframe may be permanently attached to the frame of the turf treatment trailer. One or more turf treatment units may be mounted on the subframe using one or more turf treatment unit mounting points located on the subframe. The subframe may support the (or each) turf treatment unit. Preferably two turf treatment units are mounted on the sub frame. More preferably three turf treatment units are mounted on the sub frame.

One or more subframe mounts may be located on the frame. One or more subframe connectors may be located on the subframe. The (or each) subframe connector may connect with the (or each) subframe mount to mount the subframe on the frame.

The (or each) turf treatment unit may be positioned on the subframe so that when the subframe is attached to the frame of the turf treatment trailer, a first turf treatment unit is located so that it trails the first ground-bearing trailer wheel and a second turf treatment unit is located so that it trails the second ground-bearing trailer wheel.

The turf treatment trailer may further comprise a height adjustment assembly. The height adjustment assembly may be connected between the frame and subframe. The height adjustment assembly may be connected between the frame and the (or each) turf treatment unit. The height adjustment assembly may be connected between the frame and the first and second ground-bearing trailer wheels.

Preferably the height adjustment assembly is connected to the frame, to the first ground-bearing trailer wheel and to the second ground-bearing trailer wheel so that the distance between the frame and the ground-bearing trailer wheels can be adjusted to raise and lower the or each turf treatment unit away from and into contact with the ground.

The height adjustment assembly may enable lifting and lowering of the turf treatment units into and out of contact with the turf. The height adjustment assembly may be adjusted manually. The height adjustment assembly may be actuated mechanically, electrically, hydraulically or pneumatically. The height adjustment assembly may be connected to a power source on the ride-on lawnmower or on the turf treatment trailer.

The height adjustment assembly may be operated by a remote control unit. The remote control unit may be located on the ride-on lawnmower and operable by the driver whilst driving the lawnmower.

The first ground-bearing trailer wheel and second ground-bearing trailer wheel may be connected to an axle. The first ground-bearing trailer wheel may be connected to the axle by a first axle stub. The second ground-bearing trailer wheel may be connected to the axle by a second axle stub. The first and second axle stubs may be elongate. The first ground-bearing trailer wheel may be rotatably attached to a distal end of the first axle stub. A proximal end of the first axle stub may be fixed to the axle. The second ground-bearing trailer wheel may be rotatably attached to a distal end of the second axle stub. A proximal end of the second axle stub may be fixed to the axle.

The axle may be rotatably mounted on the frame by an axle bearing. The axle may be connected to the frame by the height adjustment assembly. The height adjustment assembly may comprise an actuator attached to an arm. The actuator may be extendable and retractable. The actuator may be extended and retracted mechanically, electrically, hydraulically or pneumatically.

The actuator may be attached to the frame and the arm may be attached to the axle. Movement of the actuator in a first direction may cause the arm to rotate the axle in the axle bearing. This may cause the distal end of the first axle stub and the distal end of the second axle stub to move towards the frame. In this way the distance between the first and second ground-bearing trailer wheels and the frame may be reduced and the frame will be lowered towards the ground. Movement of the actuator in a second direction may cause the distance between the first and second ground-bearing trailer wheels and the frame to be increased in a similar manner. This will raise the frame away from the ground.

The turf treatment trailer may comprise a plurality of sub frames. To the (or each) subframe may be mounted one or more turf treatment units. To individual subframes may be mounted individual types of turf treatment unit using one or more turf treatment unit mounting points. For example, one subframe may have one or more vibratory roller units mounted on to it and another subframe may have one or more topdressing brush units mounted on to it. A subframe may comprise a plurality of different turf treatment unit mounting points to allow more than one type of turf treatment unit to be mounted to the subframe.

A trolley may facilitate the removal of a subframe from the turf treatment trailer to be replaced with a subframe on which a different type of turf treatment units are mounted. Once the trolley is in place under the turf treatment trailer, the height adjustment assembly may lower the subframe onto the trolley enabling the subframe to be uncoupled from the turf treatment trailer and wheeled away. Another subframe with its own trolley can then be wheeled into position and coupled to the frame of the turf treatment trailer.

The turf treatment trailer may comprise one or more auxiliary turf treatment units. The (or each) auxiliary turf treatment unit may comprise a rake or a brush such as a topdressing brush. The (or each) auxiliary turf treatment unit may comprise a water collecting roller unit as described above. The (or each) auxiliary turf treatment unit may comprise a grass collecting box. The grass collecting box may be located to collect cut grass or other debris produced by the (or each) turf treatment unit. The or each auxiliary turf treatment unit may be attached to the frame at one or more auxiliary attachment points.

One or more leading attachment points may be located on the leading portion of the frame. An auxiliary treatment unit attached to the (or each) leading attachment point may lead the (or each) turf treatment unit. One or more trailing attachment points may be located on the trailing portion of the frame. An auxiliary treatment unit attached to the (or each) trailing attachment point may trail the (or each) turf treatment unit.

A water collecting roller unit as described above may be attached to the (or each) trailing attachment point. The first arm of the water collecting roller unit may be attached to a first trailing attachment point. The second arm of the water collecting roller unit may be attached to a second trailing attachment point.

When a water collecting roller unit is attached to the (or each) trailing auxiliary attachment point, the ground-bearing roller of the water collecting roller unit is positioned on the frame to trail the first ground-bearing trailer wheel so that in use when the turf treatment trailer is attached to the ride-on lawnmower which is moving forward over the ground, a substantially common area of the turf on the ground is sequentially traversed by the first ground-bearing trailer wheel and treated by the water collecting roller unit.

Preferably at least one rake or brush is attached to the frame to lead or trail the at least one turf treatment unit in use.

The turf treatment trailer may be adapted to treat turf after the application of a sand topdressing to the turf. An auxiliary turf treatment unit such as a topdressing brush unit may be attached to the leading attachment point. A subframe comprising three vibratory roller units may be attached to the frame of the turf treatment trailer and connected to the power source of the turf treatment trailer. An auxiliary turf treatment unit such as a topdressing brush unit may be attached to the trailing attachment point. This configuration of turf treatment trailer will thoroughly brush an applied topdressing of sand into the surface of the turf.

Viewed from a further aspect the present invention provides a vehicle system for treating turf comprising a ride-on lawnmower and a turf treatment trailer as described hereinbefore, wherein the ride-on lawnmower comprises:
a vehicle body;
at least one grass cutting unit detachably attached to the vehicle body for cutting the turf on the ground; and
at least three ground-bearing wheels rotatably mounted on the vehicle body, one of the at least three ground-bearing wheels being a first ground-bearing wheel, wherein the grass cutting unit is positioned to lead the first ground-bearing wheel; and
wherein a turf treatment unit of the turf treatment trailer is positioned on the frame to trail the first ground-bearing wheel of the ride-on lawnmower so that in use when the ride-on lawnmower is moving forwards, a part of the turf on the ground is sequentially cut by the grass cutting unit, traversed by the first ground-bearing wheel of the ride-on lawnmower and treated by the turf treatment unit.

The vehicle system of the present invention may advantageously improve the appearance of the turf when the turf treatment has been completed by positioning the turf treatment unit of the turf treatment trailer so that it passes over the part of the ground which has received the tyre track from the first ground-bearing wheel of the ride-on lawnmower. This allows the turf treatment unit to reduce the visibility of the tyre track.

In addition, by integrating the ride-on lawnmower and turf treatment trailer, the vehicle system of the present invention may reduce the man hours required to complete a cutting operation and a turf treatment operation on the part of the turf by allowing both operations to be performed during one pass of the ride-on lawnmower over the part of the turf.

Viewed from a yet further aspect the present invention provides a method for treating turf comprising the steps of :
a. providing a ride-on lawnmower comprising a grass cutting unit;
b. attaching a turf treatment trailer to the ride-on lawnmower, the turf treatment trailer comprising at least one turf treatment unit; and
c. cutting and treating the turf in one operation using the lawnmower and turf treatment trailer.

The turf treatment trailer may be a turf treatment trailer as described hereinbefore.

An embodiment of the present invention will now be described by way of example only with reference to the accompanying drawings in which:
figure 1 shows a turf treatment trailer according to an embodiment of the invention without a sub-frame attached;
figure 2 shows the sub-frame of the turf treatment trailer of figure 1; and
figure 3 shows a side view of the sub-frame of figure 2 attached to the turf treatment trailer of figure 1; and
figure 4 shows the turf treatment trailer of figure 1 with a water collecting roller unit.

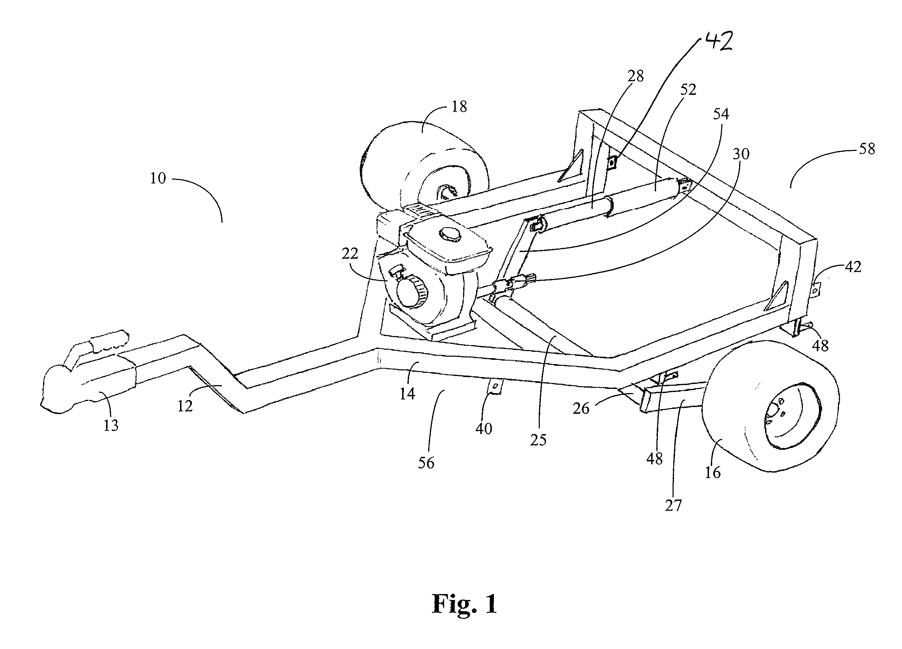

Referring to figure 1, a turf treatment trailer 10 comprises a drawbar 12 and a frame 14 connected to the drawbar 12. The drawbar 12 terminates in a connector 13. The connector 13 is detachably attachable to a ride-on lawnmower (not shown).

The turf treatment trailer 10 further comprises a first ground-bearing trailer wheel 16 and a second ground-bearing trailer wheel 18. The first ground-bearing trailer wheel 16 and second ground-bearing trailer wheel 18 are connected to an axle 25 by a first axle stub 27 and a second axle stub (not shown). The axle stubs are elongate. The first ground-bearing trailer wheel 16 is rotatably attached to a distal end of the first axle stub 27. A proximal end of the first axle stub 27 is fixed to the axle 25. The second ground-bearing trailer wheel 18 is rotatably attached to a distal end of the second axle stub. A proximal end of the second axle stub is fixed to the axle 25.

The axle 25 is rotatably mounted on the frame 14 by an axle bearing 26. The axle 25 is connected to the frame 14 by a height adjustment assembly 28. The height adjustment assembly 28 comprises an actuator 52 attached to an arm 54. The actuator 52 is extendable and retractable. The actuator 52 is attached to the frame 14 and the arm 54 is attached to the axle 25. Extension of the actuator 52 will cause the arm 54 to rotate the axle 25 in the axle bearing 26 which will cause the distal end of the first axle stub 27 and the distal end of the second axle stub to move towards the frame 14. In this way the distance between the ground-bearing trailer wheels 16, 18 and the frame 14 will be reduced and the frame 14 will be lowered towards the ground. Retraction of the actuator 52 will cause the distance between the ground-bearing trailer wheels 16, 18 and the frame 14 to be increased in a similar manner. This will raise the frame 14 away from the ground.

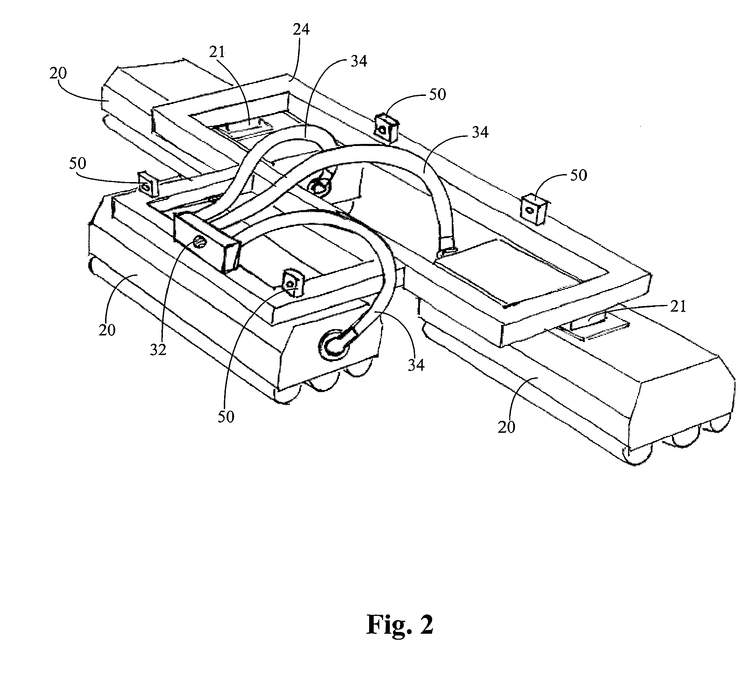

An engine 22 is mounted on the frame 14. A driveshaft 30 extends from the engine 22. The drive shaft 30 is engagable with a driveshaft coupling 32 which is located on the sub-frame 24 shown in Figure 2.

The frame 14 comprises a leading portion 56 and a trailing portion 58. Two leading attachment points 40 are located on the leading portion 56. Two trailing attachment points 42 are located on the trailing portion 58.

With reference to figure 2, a sub-frame 24 has three vibratory roller units 20 mounted on it. Each vibratory roller unit 20 is mounted to the subframe 24 via a turf treatment unit mounting point 21 on the subframe 24. A vibratory roller unit 20 is a type of turf treatment unit which is powered in use. The driveshaft coupling 32 is connected to each vibratory roller unit 20 by a drive transmission 34. When the sub-frame 24 is in place on the frame 14 the drive shaft coupling 32 is connected to the driveshaft 30 and in this way the engine 22 can provide power to the vibratory roller units 20.

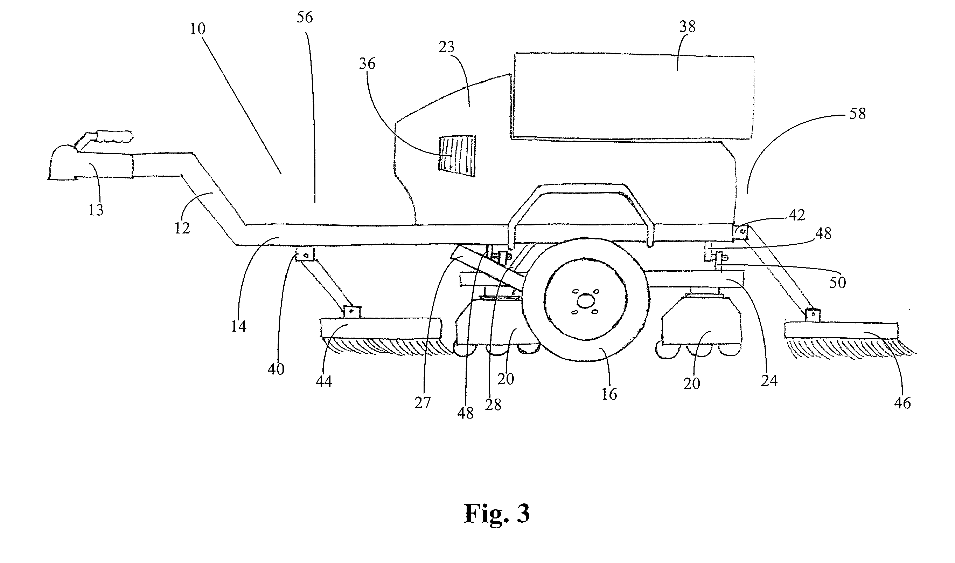

Multiple sub-frame mounts 48 are located on the underside of the frame 14 (see figures 1 and 3). Multiple sub-frame connectors 50 are mounted on the top side of the sub-frame 24. The sub-frame connectors 50 connect with the sub-frame mounts 48 to mount the subframe 24 on the frame 14 as shown in figure 3.

With reference to figure 3, the turf treatment trailer 10 is shown ready for use. An engine cover 23 is located over the engine 22. A storage box 38 is mounted on top of the engine cover 23. The sub-frame 24 is mounted to the frame 14 by the sub-frame mounts 48 and sub-frame connectors 50.

A leading auxiliary turf treatment unit in the form of a topdressing brush unit 44 is attached to the frame 14 at the leading attachment points 40. A trailing auxiliary turf treatment unit in the form of a topdressing brush unit 46 is attached to the frame 14 at the trailing attachment points 42.

In the configuration shown in Figure 3 the turf treatment trailer 10 is adapted to treat turf after the application of a sand topdressing to the turf. The leading topdressing brush unit 44, vibratory roller units 20 and trailing topdressing brush unit 46 will thoroughly brush an applied topdressing of sand into the surface of the turf.

In use, the turf treatment trailer 10 is connected to a ride-on lawnmower (not shown) by the connector 13. The ride-on lawnmower is then operated to cut the grass on the turf and the vibratory roller units 20 treat the turf at the same time. The location of the vibratory roller units 20 is such that the vibratory roller units 20, the wheels of the ride-on lawnmower, the first ground-bearing trailer wheel 16 and the second ground-bearing trailer wheel 18 travel over a substantially common part of the turf. In this way, the tyre tracks made in the turf by the wheels of the ride-on lawnmower, the first ground-bearing trailer wheel 16 and the second ground-bearing trailer wheel 18 have their visibility reduced by the vibratory roller units 20.

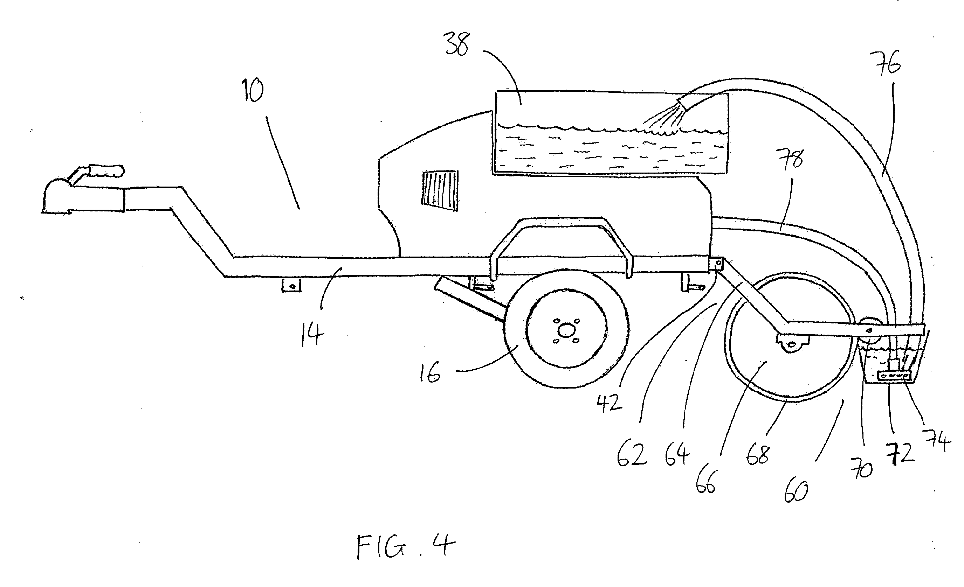

In the configuration shown in Figure 4, the turf treatment trailer 10 is adapted to collect water from flooded turf surfaces. A water collecting roller unit 60 comprises a support assembly 62. The support assembly 62 is a subframe of the turf treatment trailer 10 and is connected to the frame 14 by the trailing attachment points 42. The support assembly 62 comprises a first arm 64 and a second arm. The second arm is not shown due to the side view. A ground-bearing roller 66 is rotatably mounted on the support assembly 62 between the first arm 64 and the second arm. The ground-bearing roller 66 comprises a sponge surface layer 68 which collects water or liquid from ground which it contacts.

The water collecting roller unit 60 comprise a pressure roller 70 rotatably mounted on the support assembly 62 and a trough 72 mounted on the support assembly 62. The pressure roller 70 is positioned to compress the sponge surface layer 68 and the trough 72 is positioned to receive any liquid which is expelled from the sponge surface layer 68 when it is compressed by the pressure roller 70.

The turf treatment trailer 10 comprises a pump 74 connected to the drive shaft 30 of the engine 22 by a flexible coupling 78. The pump 74 is positioned in the trough 72 of the water collecting roller unit 60 to suck up water collected in the trough 72. In use, the water from the trough 72 is propelled by the pump 74 through a hose 76 into the storage box 38 of the turf treatment trailer 10. The water may be discharged from the storage box 38 at a suitable point in time to an appropriate discharge location.

## Claims

1. A turf treatment trailer attachable to a ride-on lawnmower comprising:
a drawbar which is detachably attachable to the ride-on lawnmower;
a frame connected to the drawbar;
a first ground-bearing trailer wheel rotatably mounted on the frame;
a second ground-bearing trailer wheel rotatably mounted on the frame; and
at least one turf treatment unit detachably attached to the frame, wherein the turf treatment unit is positioned on the frame to trail the first ground-bearing trailer wheel so that in use when the turf treatment trailer is attached to the ride-on lawnmower which is moving forward over the ground, a substantially common area of the turf on the ground is sequentially traversed by the first ground-bearing trailer wheel and treated by the turf treatment unit.

2. A turf treatment trailer as claimed in claim 1 further comprising an engine mounted on the frame and a driveshaft extending from the engine wherein the driveshaft is decouplably coupled to the at least one turf treatment unit to provide power to the at least one turf treatment unit.

3. A turf treatment trailer as claimed in claim 1 further comprising an engine which provides power to the at least one turf treatment unit.

4. A turf treatment trailer as claimed in claim 1 further comprising a power source which provides power to the at least one turf treatment unit.

5. A turf treatment trailer as claimed in claim 1 wherein the at least one turf treatment unit is couplable to a power source located on the ride-on lawnmower.

6. A turf treatment trailer as claimed in claim 4 wherein power from the power source is transmitted to the at least one turf treatment unit by a mechanical coupling, an electrical coupling, a hydraulic coupling or a pneumatic coupling.

7. A turf treatment trailer as claimed in any of claims 1 to 6 further comprising a height adjustment assembly connected to the frame so that the distance between the at least one turf treatment unit and the ground can be adjusted to raise and lower the turf treatment unit away from and into contact with the ground.

8. A turf treatment trailer as claimed in any of claims 1 to 7 further comprising a subframe on which the at least one turf treatment unit is mounted, wherein the subframe is detachably attached to the frame.

9. A turf treatment trailer as claimed in claim 8 wherein the subframe comprises a plurality of mounting points to allow more than one type of turf treatment unit to be mounted on the subframe.

10. A turf treatment trailer as claimed in any of claims 1 to 9 wherein at least one auxiliary turf treatment unit is attached to the frame to lead or trail the at least one turf treatment unit in use.

11. A turf treatment trailer as claimed in any of claims 1 to 10 comprising three turf treatment units.

12. A turf treatment trailer as claimed in any of claims 1 to 11 wherein the at least one turf treatment unit comprises one or more of a roller unit, a vibratory roller unit, a cylindrical cutter unit, a vertical cutter unit, a scarifier unit, a grooming unit, a slicing unit, an aerator unit, a sarel roller unit, a rotary brush unit, a topdressing brush unit, a rake unit or a water collecting roller unit.

13. A turf treatment trailer as claimed in any of claims 1 to 12 wherein the turf treatment trailer further comprises at least one grass collecting box.

14. A turf treatment trailer as claimed in any of claims 1 to 13 wherein the or each turf treatment unit is a vibratory roller unit.

15. A turf treatment trailer as claimed in any of claims 1 to 13 wherein the or each turf treatment unit is a water collecting roller unit.

16. A vehicle system for treating turf comprising a ride-on lawnmower and a turf treatment trailer as claimed in any of claims 1 to 15, wherein the ride-on lawnmower comprises:
a vehicle body;
at least one grass cutting unit detachably attached to the vehicle body for cutting the turf on the ground; and
at least three ground-bearing wheels rotatably mounted on the vehicle body, one of the at least three ground-bearing wheels being a first ground-bearing wheel, wherein the grass cutting unit is positioned to lead the first ground-bearing wheel; and
wherein a turf treatment unit of the turf treatment trailer is positioned on the frame to trail the first ground-bearing wheel of the ride-on lawnmower so that in use when the ride-on lawnmower is moving forwards, a part of the turf on the ground is sequentially cut by the grass cutting unit, traversed by the first ground-bearing wheel of the ride-on lawnmower and treated by the turf treatment unit.

17. A method for treating turf comprising the steps of :
a. providing a ride-on lawnmower comprising a grass cutting unit;
b. attaching a turf treatment trailer to the ride-on lawnmower, the turf treatment trailer comprising at least one turf treatment unit; and
c. cutting and treating the turf in one operation using the lawnmower and turf treatment trailer.

18. A method as claimed in claim 17 wherein the turf treatment trailer is a turf treatment trailer as claimed in any of claims 1 to 15.
